# EUROPEAN PATENT APPLICATION

(11) **EP 3 730 242 A1**
(43) Date of publication of application: **28.10.2020**
(21) Application number: 18892404.7
(22) Date of filing: 18.12.2018
(51) Int. Cl.: B23K 10/00

(54) **DEVICE FOR PROVIDING WATER STREAM ALONGSIDE PLASMA CUTTING TORCH**

(30) Priority: 18.12.2017 JP 2017241891
(71) Applicant: Koike Sanso Kogyo Co., Ltd., Tokyo 133-0057 (JP)
(72) Inventor: SAKAMOTO, Katsuhiko, Tokyo 133-0057 (JP); FURUJO, Akira, Tokyo 133-0057 (JP); KIMOTO, Ryousuke, Isezaki-shi Gunma 372-0855 (JP)
(74) Representative: Westphal, Mussgnug & Partner Patentanwälte mbB
(86) International application number: PCT/JP2018/046540
(87) International publication number: WO 2019/124365

(57) **Abstract**

To provide a device for reliably supplying water flow alongside a plasma cutting torch with a simple structure. The device (water flow device A) can be mounted to the plasma cutting torch to supply water flow alongside the plasma cutting torch, and the device includes an inner cylinder body 1 that is fitted to a main body 10 of a torch B, an outer cylinder body 2 that is arranged on an outer peripheral side of the inner cylinder body 1 to constitute a water chamber 4 between the outer cylinder body 2 and an outer peripheral surface 1a, a partition member 3 that is arranged between the inner cylinder body 1 and the outer cylinder body 2 so as to face the water chamber 4 to form a flow path 5 and the opening 6, the flow path 5 being formed between the partition member 3 and the outer peripheral surface 1a of the inner cylinder body 1, the opening 6 being formed to connect the water chamber 4 to the flow path 5, a connection member 8 that communicates with the water chamber 4 and to which a water supply member is connected to supply water to the water chamber 4, and an outlet 7 that is formed at an end of the flow path 5 to cause water passing through the flow path 5 to flow out in the form of cylinder.

## Description

### Technical Field

The present invention relates to an apparatus for supplying water flow alongside a plasma cutting torch to cut a material to be cut by using a plasma cutting torch.

### Background Art

For materials to be cut, such as steel plates, cutting has been performed by using plasma cutting torches with the materials submerged (e.g., see Patent Literature 1). With such a cutting method, scattering of dust generated during plasma cutting in a factory can be prevented, improving working environment. Furthermore, a material to be cut is cooled by water, and the amount of heat input from plasma arc can be reduced. Although the plasma cutting method for cutting a material to be cut with the material submerged in water has such advantages described above, there is also a facility-related problem that a water tank needs to have dimensions larger than the plan dimensions of the material to be cut.

In order to solve the above problems, a proposal described in Patent Literature 2 has been made. This technique includes a water nozzle that is provided adjacent to an outside of a torch body. It is intended to obtain the same effect as that of the cutting of a material with the material to be cut submerged in water by performing plasma cutting while ejecting water from the water nozzle.

### Citation List

### Patent Literature

Patent Literature 1: JP 2000-271749 A
Patent Literature 2: JP 2001-071147 A

### Summary of Invention

### Technical Problem

In addition to the above-mentioned problems, the method of plasma-cutting a material to be cut with the material submerged in water has problems, such as a cutting speed smaller than that in cutting in the atmosphere, poor visual confirmation of cutting situation due to water bubbling, and poor workability in taking a product out of water. Furthermore, since it is necessary to install the material to be cut at a depth of approximately 100 mm below the water surface and to maintain this water level, the water level needs to be adjusted according to the thickness of the material to be cut, leading to the problem of a higher equipment cost.

In the technology described in Patent Literature 2, water is locally ejected to a cut surface, and there is a problem that it is difficult to suppress oxidation of the cut surface due to the atmosphere.

An object of the present invention is to provide an apparatus for reliably supplying water flow alongside a plasma cutting torch with a simple structure.

### Solution to Problem

In order to solve the above problems, the present invention provides a typical apparatus mountable to a plasma cutting torch to supply water flow alongside the plasma cutting torch , the apparatus including: an inner cylinder body that is fitted to a main body of the plasma cutting torch, an outer cylinder body that is arranged on an outer peripheral side of the inner cylinder body to constitute a water chamber between the outer cylinder body and an outer peripheral surface of the inner cylinder body, a partition member that is arranged between the inner cylinder body and the outer cylinder body so as to face the water chamber, the partition member forming the flow path between the partition member and the outer peripheral surface of the inner cylinder body, the partition member further forming an opening for connecting the water chamber to the flow path, a connection member that communicates with the water chamber and to which a water supply member is connected to supply water to the water chamber, and an outlet that is formed at an end of the flow path to cause water passing through the flow path to flow out alongside the plasma cutting torch.

### Advantageous Effects of Invention

In the apparatus for supplying water flow alongside a plasma cutting torch according to the present invention, at an end of the flow path between the inner cylinder body and the partition member, the outlet is formed to cause water to flow out in the form of cylinder. Therefore, when the inner cylinder body is fitted to the main body of the plasma cutting torch to supply water to the water chamber via the water supply member, the supplied water flows into the flow path from the opening defined by the partition member and flows out in the form of cylinder from the outlet. Therefore, after passing through the outlet, a water flows along the main body of the plasma cutting torch.

In particular, during the cutting of a material to be cut, plasma arc and gas flow along the plasma arc are ejected from a cutting nozzle that is provided at the tip of a plasma cutting torch. Accordingly, the water flow alongside the main body of the plasma cutting torch is sucked toward the cutting nozzle and flows down along the outer periphery of the plasma arc and gas flow.

Therefore, the water flow formed along the main body of the plasma cutting torch further flows down directly in the form of a film to shield the plasma arc and gas flow from the atmosphere, and thus, oxidation of the material to be cut at a cut position is suppressed, achieving improvement of a cut surface. Furthermore, it is possible to prevent scattering of generated dust, to suppress noise and light generated during cutting without requiring expensive equipment such as a large water tank for submerging the material to be cut in water to improve a work environment, and to achieve a reduction in heat input to the material to be cut.

### Brief Description of Drawings

Fig. 1 is a diagram illustrating a structure of an apparatus for supplying water flow alongside a plasma cutting torch according to the present embodiment.
Fig. 2 is an enlarged view of a main portion of the apparatus for supplying water flow alongside a plasma cutting torch.
Fig. 3 is a diagram illustrating states in which the apparatus for supplying water flow alongside a plasma cutting torch according to the present embodiment is attached to main bodies of plasma cutting torches.

### Description of Embodiments

Hereinafter, an apparatus for supplying water flow alongside a plasma cutting torch according to the present invention (hereinafter referred to as "water flow apparatus") will be described. The water flow apparatus according to the present invention is fitted to a main body of a plasma cutting torch (hereinafter referred to as "torch") to form a water flow along the main body of the torch so that water flows in a cylindrical form along plasma arc or along both of plasma arc and secondary gas flow (hereinafter, both are referred to as a "plasma arc").

In the present invention, the expression "inner cylinder body that is fitted to a main body of a plasma cutting torch" is not necessarily limited to an inner cylinder body that is directly fitted to a main body of a plasma cutting torch but may include an inner cylinder body that is indirectly fitted to a main body of a torch through a component attached to an outer peripheral surface of the main body of a plasma cutting torch. For example, when a plasma cutting apparatus configured to support the plasma cutting torch by fitting the main body of the plasma cutting torch to a torch holder is used, the present invention may be configured to fit the inner cylinder body to the torch holder.

The cylindrical flow of water formed along the plasma arc enables to prevent the scattering of dust generated upon plasma-cutting a material to be cut, to suppress noise and light generated during the cutting, to cool the material to be cut, leading to a reduction in heat input to the material to be cut, and to suppress oxidation of a cut surface due to the atmosphere, leading to improvement of the cut surface.

For this reason, the water flow apparatus includes the water flow path formed by the inner cylinder body and the partition member, and the outlet that causes water to flow out in the form of cylinder is defined at an end of the flow path. Therefore, after being supplied to the water chamber, the water flows in a cylindrical form from the opening between the water chamber and the partition member through the flow path. In particular, the inner cylinder body of the water flow apparatus is fitted to a main body of a torch, thereby the outlet is formed along the outer periphery of the main body of the torch, making it possible to cause the water discharged from the outlet to flow along the outer periphery of the main body of the torch.

The water flowing out from the outlet is preferably in the form of a film. The water flow formed on the outer periphery of the main body of the torch in such a way makes it possible for water to flow in contact with the main body. Then, when plasma arc is ejected from a cutting nozzle provided at the tip of the torch, the water flow is attracted by the suction effect thereof, and the water flow along the plasma arc is achieved.

In order to form water flow in the form of film along the main body of the torch, a uniform water flow needs to be formed in the flow path, but the shape and size of the outlet are not particularly limited. However, if the water flows out from the outlet too vigorously, the water is highly likely to be scattered, and thus, it is not preferable to make the flow path too wide nor the amount of water too large.

In order to achieve the uniform water flow in the flow path, it is preferable to provide a weir over the entire circumference of the flow path on the upstream side of the flow path so that water passing over the weir flows through the flow path. In particular, it is more preferable to form the water chamber that serves as a pool of water over the entire circumference of the weir on the upstream side of the weir so that water accumulated in the water chamber can flow over the weir to the flow path.

The flow path preferably has a width dimension in the range of 0.5 mm to 2.0 mm and more preferably 1.0 mm to 1.5 mm. Furthermore, it is possible to form a most preferable water flow when the width dimension of the flow path is 1.2 mm.

The film of water flowing out in the form of cylinder preferably has a uniform thickness. In other words, it is not preferable to have a variation in the width dimension of the outlet. It is preferable to use the inner cylinder body, the outer cylinder body, and the partition member having a sufficiently high rigidity to constitute such an outlet. However, a spacer may be arranged in the flow path formed by the inner cylinder body and the partition member. For the spacer, a ring-shaped spacer may be used in which a plurality of holes is formed, or a plurality of slits may be formed in the inner cylinder body or the partition member.

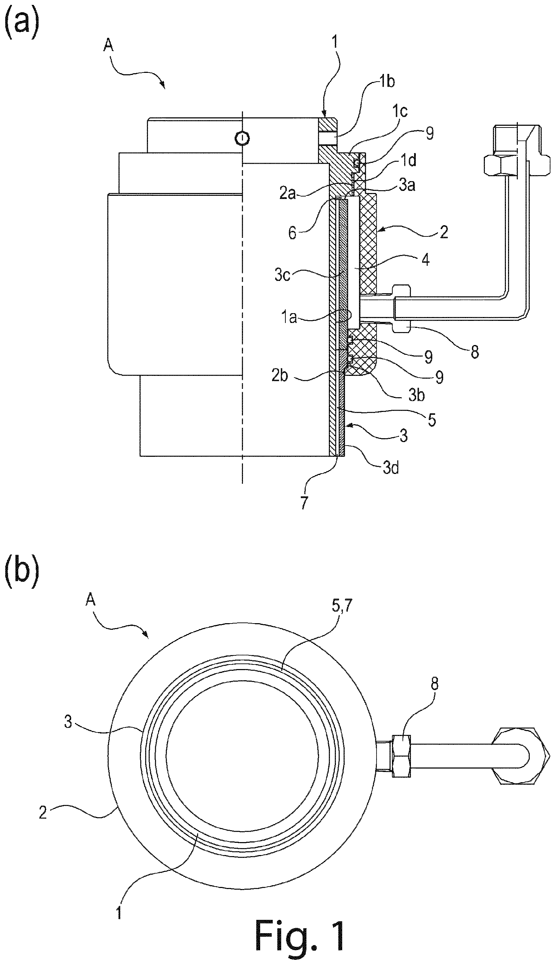

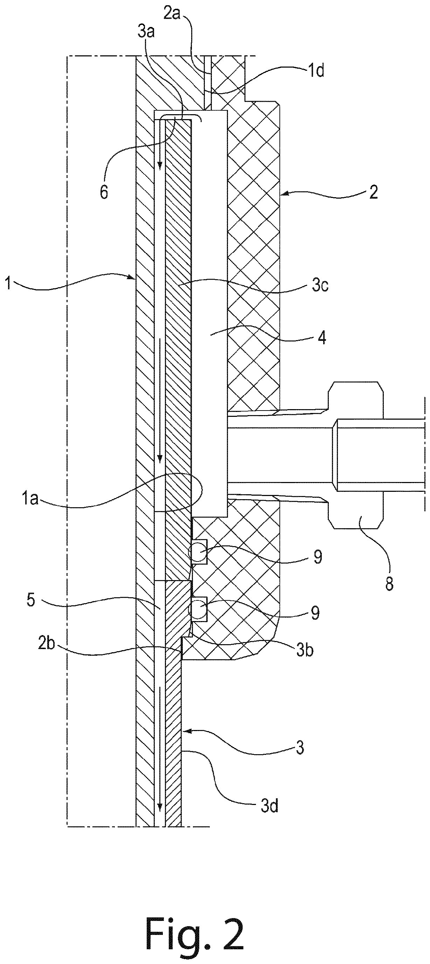

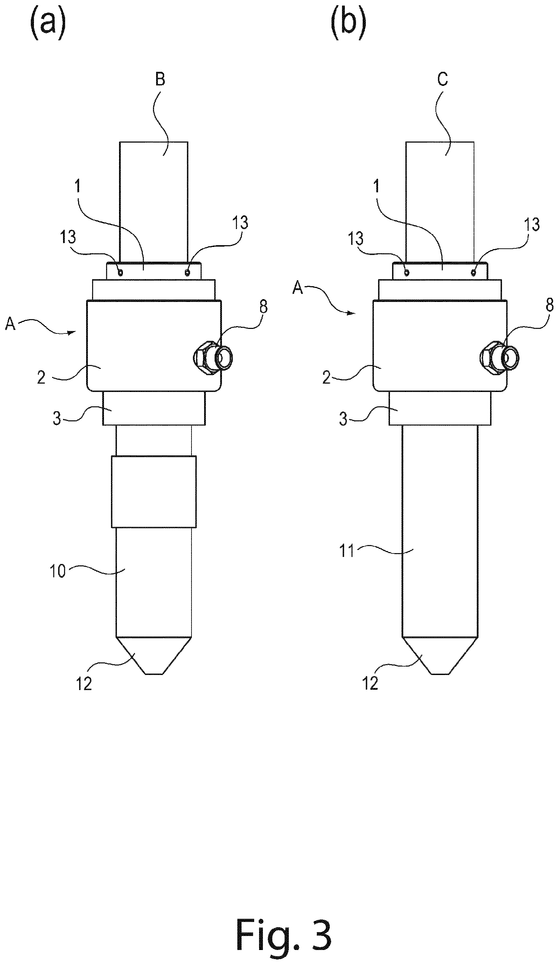

A water flow apparatus A according to the present embodiment will be described with reference to the drawings. The water flow apparatus A, which is illustrated in Figs. 1 and 2, is mounted to a main body 10 of a torch B or a main body 11 of a torch C, which are illustrated in Fig. 3, and the water flow apparatus A is configured to form water flow along the main body 10 or main body 11. A cutting nozzle 12 is mounted to the tip of each of the main bodies 10 and 11, and plasma arc and secondary gas flow is ejected from the cutting nozzle 12 toward a material to be cut, which is not illustrated, to cut the material to be cut.

The water flow apparatus A includes an inner cylinder body 1 that is fitted to the main body 10 of the torch B or the main body 11 of the torch C (hereinafter, the main body 10 of the torch B will be representatively described), an outer cylinder body 2 that is arranged on the outer peripheral side of the inner cylinder body 1, and a partition member 3 that is arranged between the inner cylinder body 1 and the outer cylinder body 2.

The outer cylinder body 2 has an inner peripheral surface on which a water chamber 4 that has a recessed groove of ring shape is formed, and the partition member 3 is opposed to the water chamber 4 to form a flow path 5 which is formed into a ring shape by an outer peripheral surface 1a of the inner cylinder body 1 and the partition member 3. The partition member 3 has an end portion 3a on the side of the water chamber 4. The end portion 3a does not make contact with the outer cylinder body 2. On the end portion 3a, an opening 6 of ring-shaped gap is formed, and the water chamber 4 and the flow path 5 are connected through the opening 6. At an end of the flow path 5 on the opposite side to the opening 6 (a lower end of a nozzle A), an outlet 7 is formed to form a cylindrical water flow.

The opening 6 does not necessarily need to be configured as a ring-shaped gap. For example, a plurality of holes may be formed as the opening 6 at a position facing the water chamber 4, at the end of the partition member 3.

At an end (upper end of the water flow apparatus A) of the inner cylinder body 1 on the opposite side from the outlet 7, a plurality of screw holes 1b is formed. As illustrated in Fig. 3, screws 13 are threaded into the plurality of screw holes 1b and fastened to the main body 10, and thus, the water flow apparatus A is mounted to the main body 10. Furthermore, a flange 1c is formed on the upper end side of the inner cylinder body 1, in the vicinity of the screw holes 1b, and a screw thread 1d is formed on the flange 1c.

On the upper end side of the outer cylinder body 2, a screw thread 2a is formed to be threadedly engaged with the screw thread 1d formed on the flange 1c of the inner cylinder body 1. The screw thread 2a is fastened to the screw thread 1d via an O-ring 9, and thus, the outer cylinder body 2 is integrally mounted to the inner cylinder body 1. Furthermore, at a lower portion of the outer cylinder body 2, a locking protrusion 2b that protrudes toward the inner peripheral surface side is formed to lock the partition member 3 to the locking protrusion 2b.

The water chamber 4 having the recessed groove of ring shape and formed on the inner peripheral surface side of the outer cylinder body 2 has a sufficiently large dimension in a vertical direction of the water flow apparatus A. A connection member 8 to which a water supply member, not illustrated, is connected is provided at a position closer to a lower end of the water chamber 4. The structure of the connection member 8 is not particularly limited, and a pipe terminal, a quickly attachable/detachable connector, or the like can be selectively used.

As described above, the connection member 8 is provided on the lower end side of the water chamber 4, and the opening 6 is formed at the upper end. Therefore, the water level of water supplied to the water chamber 4 rises from the lower end side toward the upper end and the water flows into the flow path 5 through the opening 6 when reaching the opening 6. By appropriately setting the amount of water supplied to the water chamber 4 per hour, the surface of water can be uniformly raised without waving. Therefore, it is possible to cause a substantially constant amount of water to flow from the opening 6 to the entire circumference of the flow path 5 and to further cause water to flow down in the form of cylinder from the outlet 7.

The partition member 3 faces the recessed groove formed in the inner peripheral surface of the outer cylinder body 2 so that the recessed groove functions as the water chamber 4. Additionally, the partition member 3 constitutes the flow path 5 between the partition member 3 and the outer peripheral surface 1a of the inner cylinder body 1. Therefore, the partition member 3 is formed in a cylindrical shape, and an engagement portion 3b is formed at a predetermined position of the outer peripheral surface for engaging with the locking protrusion 2b formed on the outer cylinder body 2. The position of this engagement portion 3b is set such that when the engagement portion 3b is engaged with the locking protrusion 2b of the outer cylinder body 2, the opening 6 having predetermined dimensions is formed by the end portion 3a and the upper end of the water chamber 4.

In the present embodiment, the partition member 3 is constituted by connecting an upper member 3c and a lower member 3d in series, but the partition member 3 is not limited to this configuration and, as a matter of course, may be constituted as a single sleeve.

Furthermore, in the present embodiment, a width dimension of the flow path 5 is set to approximately 1.2 mm, and the amount of water to be supplied is set to the range of approximately 8 liters to approximately 20 liters per minute. The water in this range can flow out from the outlet 7 in a form of a cylindrical film. It is preferable to change the amount of water to be supplied within the above range according to the current value of plasma arc.

In the water flow apparatus A configured as described above, as illustrated in Fig. 3, the inner cylinder body 1 is mountable by being fitted to the main body 10 of the torch B and being fastened by the screws 13 threadedly engaged with the screw holes 1b.

Then, when water is supplied into the water chamber 4 from the water supply member, not illustrated, through the connection member 8, the supplied water flows into the flow path 5 from the opening 6 formed at the upper end of the water chamber 4 and flows out from the outlet 7 in a form of a cylindrical film. The outflow water flows along the outer peripheral surface of the main body 10 and further flows down along the outer peripheral surface of the cutting nozzle 12 mounted to the tip of the main body 10.

Therefore, when plasma arc, not illustrated, is formed from the cutting nozzle 12 and secondary gas flow is ejected around the plasma arc, water flowing down along the outer peripheral surface of the cutting nozzle 12 is sucked by the plasma arc and secondary gas flow and flows along the secondary gas flow.

Therefore, by ejecting the plasma arc and the secondary gas flow from the cutting nozzle 12 toward the material to be cut and causing the water to flow down along the secondary gas flow, the water is always supplied to a cut position. Thus, the water supplied to the cut position makes it possible to prevent dust from scattering, to suppress noise and light generated during cutting, and to reduce the heat input to the material to be cut. Furthermore, the water supplied to the cutting site makes it possible to suppress oxidation of a cut surface due to the atmosphere and to improve the cut surface.

In particular, the above-mentioned effects can be better exhibited by combining a semi-submerged cutting method in which the material to be cut is not submerged approximately 100 mm below the surface of water, but the upper surface thereof is exposed and the lower surface is in contact with the surface of water.

In the present embodiment, the connection member 8 for supplying water to the water chamber 4 is mounted to the outer cylinder body 2 in a direction orthogonal to the axis of the outer cylinder body 2. However, the connection member 8 may be mounted to be inclined in a circumferential direction to the axis. In this case, water supplied to the water chamber 4 swirls in the water chamber 4, the water level rises and reaches the opening 6 in this state so that the water can be more uniformly supplied to the flow path 5.

### Industrial Applicability

The water flow apparatus according to the present invention can be mounted to an existing plasma cutting torch subsequently and used.

### Reference Signs List

- A: WATER FLOW APPARATUS
- B, C: TORCH
- 1: INNER CYLINDER BODY
- 1a: OUTER PERIPHERAL SURFACE
- 1b: SCREW HOLE
- 1c: FLANGE
- 1d: SCREW THREAD
- 2: OUTER CYLINDER BODY
- 2a: SCREW THREAD
- 2b: LOCKING PROTRUSION
- 3: PARTITION MEMBER
- 3a: END PORTION
- 3b: ENGAGEMENT PORTION
- 3c: UPPER MEMBER
- 3d: LOWER MEMBER
- 4: WATER CHAMBER
- 5: FLOW PATH
- 6: OPENING
- 7: OUTLET
- 8: CONNECTION MEMBER
- 9: O-RING
- 10, 11: MAIN BODY
- 12: CUTTING NOZZLE
- 13: SCREW
- #:

## Claims

1. An apparatus mountable to a plasma cutting torch to supply water flow alongside the plasma cutting torch, the apparatus comprising:
an inner cylinder body that is fitted to a main body of the plasma cutting torch;
an outer cylinder body that is arranged on an outer peripheral side of the inner cylinder body to constitute a water chamber between the outer cylinder body and an outer peripheral surface of the inner cylinder body;
a partition member that is arranged between the inner cylinder body and the outer cylinder body so as to face the water chamber, the partition member forming the flow path between the partition member and the outer peripheral surface of the inner cylinder body, the partition member further forming an opening for connecting the water chamber to the flow path;
a connection member that communicates with the water chamber and to which a water supply member is connected to supply water to the water chamber; and
an outlet that is formed at an end of the flow path to cause water passing through the flow path to flow out alongside the plasma cutting torch.

2. The apparatus according to claim 1, wherein the opening is formed on one end side of the water chamber, and the connection member is arranged on the other end side opposite to the opening formed in the water chamber.

3. The apparatus according to claim 1 or 2, wherein the opening is constituted by a plurality of holes defined in the partition member or a gap between one end of the partition member and the water chamber.

4. The apparatus according to any one of claims 1 to 3, wherein the connection member is mounted in a direction orthogonal to an axis of the outer cylinder body and communicates with the water chamber or is mounted to be inclined in a circumferential direction to the axis of the outer cylinder body and communicates with the water chamber.
#
